Europäisches Patentamt

European Patent Office

Office européen des brevets

(11) Veröffentlichungsnummer: **0 205 957**
**B1**

(12) **EUROPÄISCHE PATENTSCHRIFT**

(45) Veröffentlichungstag der Patentschrift: **18.04.90**

(51) Int. Cl.⁵: **A 47 J 27/04**

(21) Anmeldenummer: **86107091.0**

(22) Anmeldetag: **24.05.86**

(54) Dampfdruck-Kocher.

(30) Priorität: **19.06.85 DE 3521870**

(43) Veröffentlichungstag der Anmeldung:
**30.12.86 Patentblatt 86/52**

(45) Bekanntmachung des Hinweises auf die
Patenterteilung:
**18.04.90 Patentblatt 90/16**

(84) Benannte Vertragsstaaten:
**AT BE CH DE FR GB IT LI NL SE**

(56) Entgegenhaltungen:
**GB-A-1 328 045**
**US-A-3 227 067**
**US-A-3 236 172**
**US-A-3 320 945**
**US-A-4 343 292**

(73) Patentinhaber: **NIRO-PLAN AG**
**Baarerstr. 59**
**CH-6300 Zug (CH)**

(72) Der Erfinder hat auf seine Nennung verzichtet

(74) Vertreter: **Brommer, Hans Joachim, Dr.-Ing.**
**et al**
**Patentanwälte Dipl.-Ing. R. Lemcke Dr.-Ing. H.J.**
**Brommer Bismarckstrasse 16 Postfach 4026**
**D-7500 Karlsruhe 1 (DE)**

Courier Press, Leamington Spa, England.

## Beschreibung

Die Erfindung geht aus von einem Dampfdruck-Kocher mit einer durch eine Türe od. dgl. zugänglichen Kochkammer zur Aufnahme der zu garenden Speisen und mit einem Dampferzeuger, der aus einem beheizten Gußkörper mit mehreren eingegossenen Kanälen besteht und der einerseits an eine Wasserzuführleitung, andererseits an die Kochkammer angeschlossen ist.

Durch die US—PS 3,320,945 ist ein derartiger Dampfdruck-Kocher bekannt. Seine Verdampferkammer ist ein Gußkörper mit einem mäanderförmig ausgebildeten Kanal. Sie wird über einen Ringbrenner erhitzt.

Nachteilig an dieser Ausfürungsform ist zum einen die aufwendige Fertigung des Gußkörpers. Der mäanderförmige, verlorene Kern bereitet gußtechnisch große Probleme sowohl beim Einlegen in die Form als auch beim späteren restlosen Entfernen desselben. Auch ist das Innere der Verdampfungskammer für die mechansche Reinigung unzugänglich. Zum andereren besteht durch die große Länge des mäanderförmig geschlungenen Verdfampferkanals die Gefahr, daß sich im Bereich der Dampfentnahme überhitzter Dampf bildet, der dem Aufwärmgut Schaden zufügt.

Desweiteren ist durch die US-PS 3,227,067 ein vergleichbarer Dampfdruck-Kocher bekannt. Bei ihm ist die Verdampferkammer ein rechteckiger, freier Raum, in den seitlich mittels einer Handpumpe Wasser eingespritzt werden kann. Dieses Wasser verdampft in der elektrisch beheizten Verdampferkammer und der entstehende Dampf strömt über eine Vielzahl von Bohrungen in der oberen Kammerwand nach oben, wo er auf eine Prallplatte trifft, die seitlich umströmt werden muß. Der Raum oberhalf der Prallplatte ist durch eine Vielzahl von Düsen mit der Kochkammer verbunden.

Diese bekannte Verdampferkammer ist durch die Vielzahl von Bohrungen teuer in der Herstellung. Außerdem besteht die Gefahr, daß sich die Bohrungen bei sehr kalkhaltigem Wasser mit der Zeit zusetzen.

Unabhängig davon ist der Verdampfungsvorgang in thermodynamischer Hinsicht ungünstig, denn man arbeitet mit einer quasi statischen Verdampfung, ähnlich wie in einem Kochstopf.

Schließlich ist auch die Art der Wasserzuführung durch eine Handpumpe unbequem und ungenau, weil keine kontinuierlich Dampferzeugung gewährleistet ist.

Daneben sind Dampferzeuger für Dampfdruck-Kocher bekannt, die aus einem dickwandigen, rohrförmigen Behälter bestehen. In der Rohrwand sind zahlreiche über den Umfang verteilte Axialbohrungen eingebracht, in denen jeweils eine Heizpatrone streckt. Diese Axialbohrungen müssen unter sehr engen Toleranzen hergestellt werden. Zum einen, damit die Heizpatronen allseits gut anliegen und ein hoher Wärmeübergang in das Wandmaterial des Verdampfers gewährleistet ist. Zum anderen darf die Passung nicht zu eng sein, damit man die Heizpatronen noch axial einschieben kann. Als weiterer Nachteil kommt im Betrieb dazu, daß es aufgrund der unterschiedlichen Wärmednungen zu Verspannungen zwischen Heizpatrone und Verdampferwand kommen kann. Die Heizpatronen backen dann in den Bohrungen fest und können im Falle eines Defektes nicht mehr herausgezogen werden, sondern müssen mühsam ausgebohrt werden.

Hiervon ausgehend, liegt der vorliegenden Erfindung die Aufgabe zugrunde, den Dampfdruck-Kocher der Eingangs beschriebenen Gattung sowohl bezüglich des Herstellungsaufwandes als auch bezüglich de Wärmeübergangsverhältnisse zu verbessern. Die Erfindung geht dabei von der Erkenntnis aus, daß Maßnahmen in erster Linie am Dampferzeuger des Dampfdruck-Kochers zu treffen sind.

Die Aufgabe wird erfindungsgemäß dadurch gelöst, daß ein gemeinsamer Zuführkanal und mehrere davon abzweigende Verteilkanäle vorgesehen sind, die an ihren Enden in eine Kondensat-Abscheidkammer münden, wobei der Gußkörper mit von der Wasser zu fuhrseite aus leicht ansteigenden Verteilkanälen in den Dampfdruck-Kocher eingebaut ist. Dadurch ergeben sich mehrere Vorteile. So verbleibt durch die Schrägstellung der Verteilkanäle in ihrem unteren Bereich ein kleines Flüssigkeitsreservoir das sicher stellt, daß in diesem Bereich nur Sattdampf gebildet wird. Ferner wird durch die Schrägstellung eine gleichmäßige Beaufschlagung der Verteilkanäle erreicht.

Desweiteren enden die Verteilkanäle in einer Kondensatausscheidekammer. Dies hat den Vorteil, daß die vom Dampf mitgerissenen Flüssigkeitsteilchen am Ende eines jeden Verteilkanales ungehindert ausfallen können, und nicht der Kochkammer zugeleitet werden.

Alle diese Vorteile führen zu einer schonenden Erhitzung des Kochgutes, was für dessen Qualität von entscheidender Bedeutung ist.

Außerdem zeichnet sich die erfindungsgemäße Lösung durch niedrige herstellkosten aus. So können die Kanäle im Gußkörper bei dessen Herstellung gleichzeitig mitgegossen werden, ohne daß komplizierte Kerne notwendig wären. Auch erübrigen sich die bisher teilweise notwendigen Düsen.

Zweckmäßigerweise bestehen die eingegossenen Kanäle aus einem gemeinsamen Zuführkanal, der vorzugsweise in Querrichtung läuft und davon abzweigenden Verteilkanälen, die vorzugsweise in Längsrichtung laufen. Bei dieser Anordnung kann das Volumen und die Wärmekapazität des Gußkörpers optimal ausgenützt werden und man kommt infolge hoher Energiedichte mit bescheidenen Abmessungen aus. Dies ist bei Küchengeräten, wo der Platzbedarf eine wesentliche Rolle spielt, von besonderem Vorteil. Selbstverständlich kann dieser Verlauf der Kanäle auch in der Form realisiert werden, daß der Zuführkanal nicht eingegossen ist, sondern außerhalb der Verdampferkammer verläuft.

Erfolgt die Beheizung des Dampferzeugers elektrisch, so empfiehlt es sich, den Gußkörper plattenförmig auszubilden und ihn an seinen beiden planen Heizflächen, die zweckmäßig parallel zueinander verlaufden, mit elektrischen Heizplatten zu bestücken. Diese Heizplatten, die den gleichen Aufbau wie bei einem Bügeleisen haben können, lassen sich in einfacher Weise an die flachen Außenwände des Gußkörpers anlegen und durch Schrauben od. dgl. anpressen. Wärmedehnungsdifferenzen sind dabei wegen der nur einseitigen Anlage der Heizplatten unkritisch. Auch lassen sie sich bei dieser Art der Montage im Falle eines Defektes problemlos austauschen.

Um das Mitreißen von Wassertröpfchen in die Verbindungsleitung zur Kochkammer auszuschließen, empfiehlt es sich, daß die Verteilkanäle in eine Kondensat-Abscheidekammer des Dampferzeugers münden. Erst anschließend gelangt dann der tropfenfreie Sattdampf in die Verbindungsleitung zur Kochkammer. Das anfallende Kondensat kann periodisch über eine Ablaßleitung entfernt werden.

Zweckmäßig diese Abscheidekammer in axialer Verlängerung der Verteilkanäle eine Inspektionsöffnung auf. Dadurch ist nicht nur eine chemische, sondern auch eine mechanische Reinigung und insbesondere auch eine optische Überprüfung der Kanäle möglich.

Eine weitere zweckmäßige Ausgestaltung der Erfindung besteht darin, daß die Wasserzufuhr zu den Kanälen automatisch in Abhängigkeit von der im Kocher herrschenden Temperatur oder von dem Dampfdruck erfolgt. Es wird also beispielsweise in der Kochkammer ein bestimmter Druck als Solldruck vorgegeben. Durch den Wärmeverbrauch zum Garen der Lebensmittel wie auch durch Wärmeverluste in der Kochkammer kondensiert dort laufend Dampf, so daß der Druck allmählich abnimmt. Wird der Solldruck unterschritten, so wird automatisch Wasser in den Dampferzeuger eingespritzt, bis der entstehende Dampf den Druck in der Kochkammer wieder auf den vorgegebenen Wert erhöht. Entsprechend kann dies auch durch Temperaturüberwachung gesteuert werden.

Weitere Merkmale und Vorteile der Erfindung ergeben sich aus der nachfolgenden Beschreibung eines Ausführungsbeispieles anhand der Zeichnung; dabei zeigt:

Fig. 1 ein Funktionsdiagramm des Dampfdruck-Kochers;

Fig. 2 ein Dampferzeuger in vergrößerter Darstellung in der Draufsicht;

Fig. 3 den Dampferzeuger nach Fig. 2 in der Seitenansicht und

Fig. 4 eine gasbeheizte Ausführung des Dampferzeugers.

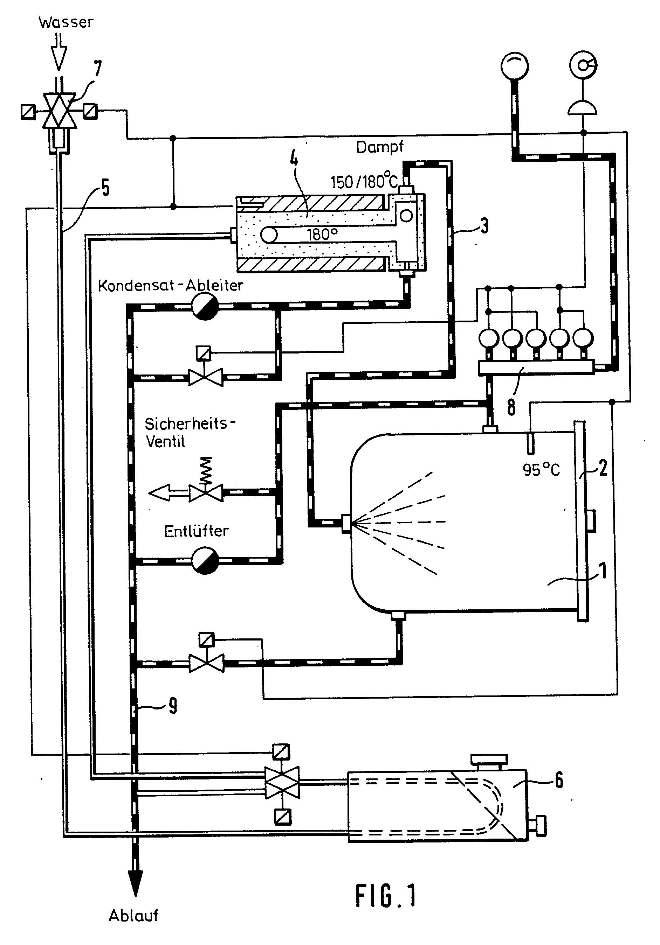

In Fig. 1 sind die wesentlichen Bestandteile des Dampfdruck-Kochers in Form eines Fließschemas zusammengestellt. Sie befinden sich in der Praxis in einem gemeinsamen Gehäuse, dessen Größe im wesentlichen durch die Abmessungen der Kochkammer 1 bestimmt sind. An der Vorderseite ist die Kochkammer 1 durch eine druckdichte Tür 2 verschließbar. Im Inneren können Etagen vorgesehen vorgesehen sein, um die zu garenden Speisen übereinander zu stapeln und den Innenraum voll auszunützen.

Wie die Zeichnung zeigt, ist die Kochkammer 1 über eine Verbindungsleitung 3 an einen Dampferzeuger 4 angeschlossen. Der Dampferzeuger 4 ist seinerseits an eine Wasserzuführleitung 5, die einen Enthärter 6 durchläuft, angeschlossen. In dem Enthäter 6 wird das Wasser mittels Regenerierharz od. dgl. in an sich bekannter Weise von seinen mitgeführten Mineralstoffen befreit, damit die anschließende Verdampfung möglichst rückstandsfrei erfolgt. Die Steuerung der Wasserzufuhr erfolgt durch ein Elektromagnetventil 7, das von der Steuer- und Regeleinheit 8 in an sich bekannter Weise betätigt wird.

Außerdem sind die Kochkammer 1 und der Dampferzeuger 4 in der üblichen Weise an eine Kondensat-Ableitung 9 angeschlossen.

Die Funktion ist folgende: In der Kochkammer 1 ist ein bestimmter Druck als Solldruck vorgegeben. Zum Erreichen dieses Druckes wird über das Ventil 7 Wasser in den Dampferzeuger 4 eingeleitet, dessen Wandtemperatur automatisch durch die Steuer- und Regeleinheit 8 zwischen 150°C und 180°C gehalten wird. Dadurch verdampft das zugeführte Wasser und der entstehende Dampf strömt über die Leitung 3 in das Innere der Kochkammer 1. Dieser Vorgang wiederholt sich, sobald der Solldruck in der Kochkammer 1 unterschritten wird.

Die Wasserzufuhr, d. h. die Steuerung des Ventils 7, erfolgt als in Abhängigkeit von den Druckverhältnissen in der Druckkammer 1. Ebenso könnte die Steuerung auch in Abhängigkeit von der Kochkammertemperatur erfolgen.

Die Beheizung des Verdampfers 4 wird immer dann eingeschaltet, wenn eine bestimmte Mindesttemperatur an der Wand unterschritten ist, im Ausführungsbeispiel 150°C und außerdem immer dann, wenn Wasser in den Verdampfer eingespritzt wird.

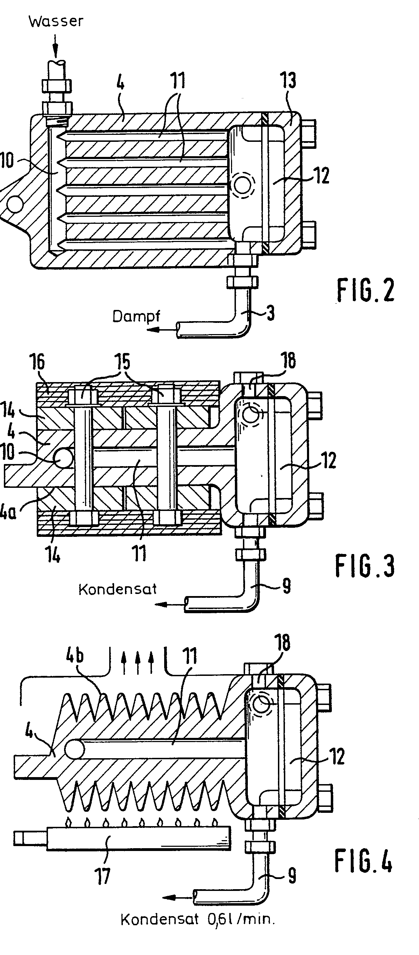

Die Steuerung erfolgt über 2 voneinander entkoppelte Regelkreise. Im Gegensatz zu den bisher bekannten Dampfdruck-Kochern ist der Dampferzeuger im vorliegenden Fall nicht als dickwandiger Röhrenverdampfer mit in die Rohrwand eingelassenen Heizpatronen, sondern als Gußkörper mit eingegossen Strömungskanälen für das zu verdampfende Wasser ausgebildet. Seine Einzelheiten ergeben sich aus den Fig. 2 bis 4. Wie die Zeichnungen zeigen, weist der Gußkörper 4 einen eingegossenen Zuführkanal 10 auf, der als Sackloch ausgebildet ist und zahlreiche davon rechtwinklig abzweigende Verteilkanäle 11, in denen im wesentlichen der Verdampfungsvorgang stattfindet. Der Gußkörper wird so in den Dapfdruck-Kocher eingebaut, daß die Verteilkanäle 11 von der Wasserzufuhrseite, also von dem Zuführkanal 10 aus betrachtet, leicht ansteigen. Dadurch wird eine gleichmäßige Beaufschlagung der Verteilkanäle 11 erreicht.

An ihrem Ausgang münden die Verteilkanäle 11 in eine Abscheidekammer 12. Von dort zweigt der Dampf in Querrichtung in die Verbindungswleitung 3 zur Kochkammer 1 ab.

Die Abscheidekammer 12 ist durch einen abschraubbaren Deckel 13 zugänglich. Er gestattet auch die Reinigung und Inspektion der Verteilkanäle 11, wo aufgrund des stattfindenden Verdampfungsprozesses mit einer gewissen Rückstansbildung zu rechnen ist, obwohl das Wasser enthärtet wird. Der Verdampfer erfüllt daher die bei Lebensmitteln besonders hohen hygienischen Anforderungen in hervorragender Weise.

Wie man sich leicht vorstellen kann, führt der in den Verteilkanälen 11 entstehende Dampf infolge der Volumenzunahme des Gemisches zu einer stark beschleunigten Strömung zum Verdampferende hin. Dies ergibt eine intensive Verwirbelung nicht nur innerhalb der Dampfphase, sondern auch in dem dünnen Wasserfilm an der Kanalwand, woraus sich ein wesentlich höherer Wärmeübergang als bei den bisher beekannten Dampfdruck-Kochern einstellt. Zugleich wird die gesamte wärmeaustauschende Fläche gleîchmässig-belastet.

Wird der Verdampfer elektrisch beheizt, wie dies vorherrschend der Fall ist und in den Fig. 2 und 3 dargestellt ist, so ergeben sich weitere Vorteile gegenüber dem Stand der Technik. Der Gußkörper 4 ist in diesem Falle plattenförmig ausgebildet und weist zwei gegenüberliegende plane Heizflächen 4a auf, die parallel zu den Kanälen 10 und 11 verlaufen. An diese Heizflächen 4a sind flächig anliegende, elektrische Heizplatten 14 montiert, beispielsweise mit Klammern oder mit den zeichnerisch dargestellten Befestigungsschrauben 15, die den Gußkörper im Zwischenraum zwischen benachbarten Verteilkanälen 11 durchqueren oder an der Außenseite des Gußkörpers angeordnet sind.

Gegenüber den bisher bekannten elektrisch beheizten Dampfdruck-Kochern zeichnet sich diese Konstruktion durch wesentlich günstigere Herstellungskosten aus, da die Bohrungen enger Toleranzen zum Einbringen der Heizpatronen entfallen. Auch zeichnet sie sich, wie schon gesagt, durch einen intensiveren Wärmeaustausch aus, da das zugeführte Wasser von Anfan an in direktem Kontakt mit der Verdampferwand steht.

Selbstverständlich kann der Kanal 10 außerhalb des Gußkörpers (4) angeordnet sein, indem die Kanäle 11 entsprechend verlängert werden.

Ein Beispiel für eine gasbeheizte Ausführungsform ist in Fig. 4 dargestellt. Im Inneren ist der Dampferzeuger dabei identisch aufgebaut wie bei der elektrisch beheizten Ausführung. Lediglich ist anstelle der planen Heizflächen 4a ein Rippenprofil 4b vorgesehen.

Die Beheizung ist durch einen Gasbrenner 17 anbgedeutet.

Schließlich ist beiden Dampferzeugern noch eine zusätzliche Reinigungsöffnung 18 in einer Seitenwand der Abscheidekammer 12 gemeinsam. Sie eignet sich insbesondere für eine Flüssig-Reinigung der Verdampferkanäle.

Zusammenfassend liegt der Vorteil der Erfindung darin, daß sich der Dampfdruck-Kocher durch einen besseren Wärmeübergang und damit durch eine feinefühligere Regelung der vorgegebenen Druck- oder Temperaturwerte auszeichnet, was gerade bei dem Garprozeß von Lebensmitteln von besonderer Bedeutung ist. Zugleich können aufgrund der niedrigeren Herstellkosten neue Anwenderkreise für dieses Kochprinzip erschlossen werden.

**Patentansprüche**

1. Dampfdruck-Kocher mit einer durch eine Türe (2) od. dgl. zugänglichen Kochkammer (1) zur Aufnahme der zu garenden Speisen und mit einem Dampferzeuger (4), der aus einem beheizbaren Gußkörper mit mehreren eingegossenen Kanälen (11) besteht und der einerseits an eine Wasserzuführleitung, andererseits an die Kochkammer (1) angeschlossen ist, dadurch gekennzeichnet, daß ein gemeinsamer Zuführkanal (10) und mehrere davon abzweigende Verteilkanäle (11) vorgesehen sind, die an ihren Enden in eine Kondensat-Abscheidekammer (12) münden, wobei der Gußkörper (4) mit von der Wasserzufuhrseite aus leicht ansteigenden Verteilkanälen (11) in den Dampfdruck-Kocher eingebaut ist.

2. Dampfdruck-Kocher nach Anspruch 1, dadurch gekennzeichnet, daß der Zuführkanal (10) als Querkanal, die Verteilkanäle (11) als Längskanäle angeordnet sind.

3. Dampfdruck-Kocher nach einem der vorhergehenden Ansprüche, dadurch gekennzeichnet, daß der Gußkörper (4) plattenförmig ausgebildet ist und an seinen beiden planen Heizflächen (4a) mit elektrischen Heizplatten (14) bestückt ist.

4. Dampfdruck-Kocher nach einem der vorhergehenden Ansprüche, dadurch gekennzeichnet, daß die Abscheidekammer (12) in axialer Verlängerung der Verteilkanäle (11) eine Inspektionsöffnung aufweist.

5. Dampfdruck-Kocher nach Anspruch 1, 2 oder 4, dadurch gekennzeichnet, daß der Gußkörper (4) zur Brennerbeheizung außenseitig berippt ist.

6. Dampfdruck-Kocher nach einem der vorhergehenden Ansprüche, dadurch gekennzeichnet, daß die Wasserzufuhr zu den Kanälen (10, 11) automatisch in Abhängigkeit von der im Kocher herrschenden Temperatur oder von dem Dampfdruck erfolgt.

**Revendications**

1. Cuiseur à pression de vapeur ayant une chambre de cuisson (1) accessible par une porte (2) ou similaire, pour recevoir les mets à traiter et un générateur de vapeur (4) qui est composé d'un corps de fonte chauffable avec plusieurs conduits (11) venus de fonderie et qui est raccordé d'une part à une arrivée d'eau et d'autre part à la chambre de cuisson (1), caractérisé par le fait qu'il est prévu un conduit d'alimentation (10) commun et plusieurs conduits (11) de distribution en dérivant, qui débouchent à leurs extrémités dans une chambre (12) de séparation des condensats, le corps de fonte (4) étant incorporé dans le cuiseur à pression de vapeur, avec les conduits de distribution (11) en pente légèrement ascendante depuis le côté de l'alimentation en eau.

2. Cuiseur à pression de vapeur selon la revendication 1, caractérisé par le fait que le conduit d'alimentation (10) est disposé en conduit transversal, et les conduits de distribution (11) en conduits longitudinaux.

3. Cuiseur à pression de vapeur selon l'une des revendications précédentes, caractérisé par le fait que le corps de fonte (4) est conformé en plaques et que ses deux surfaces de chauffe planes (4a) sont garnies de plaques chauffantes électriques (14).

4. Cuiseur à pression de vapeur selon l'une des revendications précédentes, caractérisé par le fait que la chambre de séparation (12) présente un orifice de visite dans le prolongement axial des conduits de distribution (11).

5. Cuiseur à pression de vapeur selon la revendication 1, 2 ou 4, caractérisé par le fait que le corps de fonte (4) est nervuré à l'extérieur en vue d'un chauffage par brûleur.

6. Cuiseur à pression de vapeur selon l'une des revendications précédentes, caractérisé par le fait que l'alimentation en eau des conduits (10, 11) se fait automatiquement en fonction de la température régnant dans le cuiseur ou en fonction de la pression de vapeur.

**Claims**

1. Pressure cooker having a boiling chamber (1), accessible through a door (2) or the like, for the reception of the foodstuffs to be prepared, and having a steam generator (4) which consists of a heatable casting with a plurality of cast-in passages (11) and which is connected on the one hand to a water supply conduit, and on the other to the boiling chamber (1), characterised in that there are provided a common feed passage (10) and several distributor passages (11) branching off from it and opening at their ends into a steam trap chamber (12), the casting (4) being installed in the pressure cooker with the distributor passages (11) rising slightly from the water supply side.

2. Pressure cooker according to claim 1, characterised in that the feed passage (10) is arranged as transverse passage, and the distributor passages (11) are arranged as longitudinal passages.

3. Pressure cooker according to one of the preceding claims, characterised in that the casting (4) is made in plate form and is equipped with electric heating plates (14) on its two planar heating surfaces (4a).

4. Pressure cooker according to one of the preceding claims, characterised in that the steam trap chamber (12) has an inspection opening in an axial prolongation of the distributor passages (11).

5. Pressure cooker according to claim 1, 2 or 4, characterised in that the casting (4) is externally finned for burner heating.

6. Pressure cooker according to one of the preceding claims, characterised in that the water supply to the passages (10, 11) takes place automatically in dependence on the temperature prevailing in the cooker or on the steam pressure.

Wasser

Dampf

150 / 180°C

180°

4

3

5

7

Kondensat - Ableiter

Sicherheits -
Ventil

Entlüfter

95°C

2

1

8

9

6

Ablauf

FIG.1

Wasser

4  11  13

10  12

**FIG.2**

Dampf  3

16  15  18

14
4
10  12

4a

14  11

**FIG.3**

Kondensat  9

4b  ↑↑↑↑  11  18

4  12

17

**FIG.4**

Kondensat 0,6 l/min.